# EUROPÄISCHE PATENTSCHRIFT

(11) **EP 0 807 607 B1**
(45) Veröffentlichungstag und Bekanntmachung des Hinweises auf die Patenterteilung: **12.04.2000**
(21) Anmeldenummer: 97107774.8
(22) Anmeldetag: 13.05.1997
(51) Int. Cl.: C02F 9/00, C02F 1/58, C02F 1/20

(54) **Verfahren zur Aufarbeitung von verbrauchten fotografischen Bädern**
Process for working up spent photographic processing baths
Procédé de retraitement de bains de traitement photographiques usés

(30) Priorität: 16.05.1996 DE 19619827
(43) Veröffentlichungstag der Anmeldung: 19.11.1997
(73) Patentinhaber: Noero, Roger, 76199 Karlsruhe (DE)
(72) Erfinder: Noero, Roger, 76199 Karlsruhe (DE)
(74) Vertreter: Lichti, Heiner, Dipl.-Ing.

(56) Entgegenhaltungen:
- EP-A- 0 434 107
- DE-A- 4 025 895
- DE-C- 3 440 894
- US-A- 4 755 453
- US-A- 4 874 530
- US-A- 5 085 836
- DATABASE WPI Section Ch, Week 9527 Derwent Publications Ltd., London, GB; Class D15, AN 95-203129 XP002036614 & JP 07 116 670 A (KO ENG KK) , 9.Mai 1995
- DATABASE WPI Section Ch, Week 7626 Derwent Publications Ltd., London, GB; Class D15, AN 76-48533X XP002036615 & JP 51 052 666 A (INOUE S) , 10.Mai 1976

## Beschreibung

Die Erfindung betrifft ein Verfahren zur Aufarbeitung von verbrauchten photographischen Bädern aus Schwarz/Weiß-Prozessen, nämlich Entwicklerbädern mit einem überwiegenden Anteil an Alkalisulfit, insbesondere Natriumsulfit, und Fixierbädern mit einem überwiegenden Gehalt an Thiosulfaten, insbesondere Ammoniumthiosulfat und/oder Natriumthiosulfat.

Für die Entwicklung von Schwarz/Weiß-Photographien werden in großen Mengen Entwicklerbäder und Fixierbäder benutzt. Entwicklerbäder enthalten heute zum überwiegenden Teil Natriumsulfit als Sauerstoffakzeptor und daneben Hydrochinon, Kaliumbromid, Carbonate, Borate oder Phosphate und als basische Komponente Natriumhydroxid. Fixierbäder enthalten als Hauptkomponente Thiosulfate, und zwar in der Regel bis zu 90% Ammoniumthiosulfat und 10% Natriumthiosulfat, sowie gleichfalls Sulfite und Bromide, gegebenenfalls Kaliumalaun und als saure Komponente zumeist Essigsäure.

Verbrauchte Bäder enthalten neben nicht verwertbaren Überschüssen der vorgenannten Komponenten komplexgebundene Silberionen, wasserlösliche Bestandteile aus dem fotografischen Material, wie Kolloide aus Emulsions- und Schutzschichten, Weichmacher etc. Diese Abfallbäder stellen nach den heutigen Umweltschutzvorschriften Sonderabfälle dar, die entsprechend den gesetzlichen Bestimmungen entsorgt oder aber aufgearbeitet werden müssen, um in den üblichen Abfallkreislauf gegeben werden zu können.

Bereits seit langer Zeit ist es bekannt, die wertvollste Komponente verbrauchter Bäder, nämlich das darin enthaltene Silber zurückzugewinnen. Dies geschieht durch elektrolytische Abscheidung des Metalls oder durch Ausfällen mittels Wasserstoffperoxid. Die entsilberten Bäder können durch Oxidation und Fällungsreaktionen (DE 33 37 215 A1) weiterbearbeitet werden, indem Fixier- und Entwicklerlösung gemischt und Wasserstoffperoxid zugesetzt wird. Dabei werden die Sulfide, Sulfite und Thiosulfate in Alkalisulfate überführt. Anschließend wird Kalkmilch als Fällungsmittel verwendet. Dadurch werden größere Mengen Calciumsulfat (Gips) erhalten. Noch weit größere Mengen an Gips fallen heute bei Reinigungsprozessen saurer Medien (Rauchgase, Abwasser etc.) durch Zugabe von Kalkmilch an. Diese großen Mengen an Prozeßgips sind wirtschaftlich kaum mehr verwertbar, zumal der Reinheitsgrad für viele Anwendungszwecke nicht befriedigend ist.

Es ist weiterhin bekannt, die verbrauchten und entsilberten Bäder unter Vakuum zu destillieren. Damit wird vornehmlich die Salzkonzentration angehoben und das Sondermüll-Volumen um ca. 20 bis 30% reduziert. Das anfallende Wasserkondensat enthält noch zu viele Verunreinigungen aus den Photobädern, als daß eine Einleitung in das Abwasser möglich wäre. Die weitere Reinigung über Ionenaustauscher oder Umkehrosmose ist aufwendig und deshalb unwirtschaftlich.

Das Verbrennen von verbrauchten Photochemikalien durch Eindüsen in Müllverbrennungsanlagen führt zur Anhebung des SO₂-Gehaltes in den Rauchgasen und damit zu einer zusätzlichen Belastung der Rauchgas-Entschwefelungsanlage, wie auch des Gips-Haushaltes.

Die elektrodialytische Regenerierung von Photobädern (DE 30 22 305 A1, DE 30 22 328 A1) führt zur Rückgewinnung der Silberionen. Ferner fallen Salze an, die in der Praxis aber offensichtlich keine Verwertung bei der Herstellung von Neubädern gefunden haben. Ferner muß die so bearbeitete Lösung in ihren Bestandteilen ergänzt werden.

Schließlich ist es bekannt (DE 34 40 894 A1) Photochemikalien unter größerem technischen Aufwand, insbesondere Einsatz von Energie und Chemikalien aufzuarbeiten, wobei destilliertes Wasser, eine etwa zehnprozentige Ammoniaklösung, Calciumsulfat und Ammonium-/Natriumthiosulfat anfallen. Das Thiosulfat wird mit etwa 50% zurückgewonnen, kann aber wegen seiner Verunreinigungen nicht wieder für Fotobäder eingesetzt werden. Auch die gewonnenen Mengen an Ammoniaklösung sind wirtschaftlich unbedeutend. Schließlich fallen auch hier wiederum größere Mengen Gips und verunreinigtes Wasserkondensat an.

Der Erfindung liegt die Aufgabe zugrunde, die in Schwarz/Weiß-Prozessen verwendeten Entwickler- und Fixierbäder in einem einzigen, mehrstufigen Verfahren in umweltverträglicher Weise zu neuen Stoffen aufzuarbeiten.

Diese Aufgabe wird gemäß der Erfindung dadurch gelöst, daß nach dem Abscheiden des in den Bädern enthaltenen Silbers
- die verbrauchten Fixierbäder mit konzentrierter HCl auf etwa pH 0,5 gebracht werden und der durch Zerlegung der Thiosulfate entstehende elementare Schwefel abgetrennt wird, während
- die verbleibende schwefligsaure Zwischenlösung mit den verbrauchten Entwicklerbädern gemischt und auf etwa pH 2 eingestellt wird und die entstehende, an SO₂ übersättigte Lösung erwärmt und reines SO₂ unter Vakuum abgezogen wird,
- die verbleibende, SO₂-freie Restlösung mit Ca(OH)₂ auf ca. pH 10 eingestellt und das freigesetzte Ammoniak abgezogen wird.

Fixierlösungen für die Schwarz/Weiß-Entwicklung enthalten im Neuzustand ca. 200g Thiosulfat und 20g Sulfit pro Liter. Entwicklerlösungen enthalten bis zu 100g Sulfit pro Liter. In einem Liter verbrauchter Fixierlösung sind noch etwa 120 bis 150g Thiosulfat und 10 bis 15g Sulfit enthalten. In verbrauchten Entwicklerlösungen liegen pro Liter noch etwa 40 bis 50g Sulfit vor.

Bei der erfindungsgemäßen Aufarbeitung von Fixierbädern durch Zugabe von konzentrischer Salzsäure entstehen aus 1000g Ammoniumthiosulfat ca. 200 bis 210g elementarer Schwefel und 550g Sulfit (SO₃⁻⁻). Das entstehende SO₃⁻⁻ läßt sich unter Vakuum abziehen und es werden 440g reines SO₂ gewonnen. Die Rückgewinnung des Schwefels erfolgt am einfachsten durch Sedimentation. Dabei empfiehlt es sich, die Lösung über ca. 12 Stunden absetzen zu lassen. Wird auch der zurückgewonnene Schwefel durch Verbrennung in SO₂ umgesetzt, erhöht sich die SO₂-Ausbeute um ca. 400g. Aus 1000g Thiosulfat werden also ca. 840g SO₂ gewonnen.

In der zweiten Stufe wird der schwefligsauren Zwischenlösung verbrauchte Entwicklerlösung zugegeben, deren Basizität zur Anhebung des pH-Wertes führt. Dieser sollte etwa auf pH 2 eingestellt werden. Dadurch werden die in Entwicklerlösungen enthaltenen Sulfite gleichfalls in SO₂ überführt. Die aus beiden Verfahrensstufen an SO₂ übersättigte Lösung wird anschließend vorteilhafterweise erwärmt und das SO₂ unter Vakuum abgezogen, weil es sich nahezu vollständig zurückgewinnen läßt.

Das bei dem erfindungsgemäßen Verfahren anfallende SO₂ liegt mit hoher Reinheit vor. Es kann problemlos bei ca. 2bar zu flüssigem SO₂ verdichtet oder durch Einleitung in Wasser in schweflige Säure mit höchstem Reinheitsgrad umgesetzt werden. Ferner ist die Herstellung von Alkalihydrogensulfiten in wässriger Lösung oder Suspension möglich.

In der letzten Stufe wird die SO₂-freie Restlösung mit Calciumhydroxid auf pH10 eingestellt und das frei werdende Ammoniak unter Vakuum abgezogen. Aus 1000g Ammoniumthiosulfat werden ca. 240g NH₄⁺ gewonnen. Es kann gasförmig oder als Ammoniaklösung weiterverwendet oder durch Einleiten in saure Lösungen in verwertbare Ammoniumsalze umgewandelt werden.

Nach Abzug des Ammoniaks stellt sich ein pH-Wert im Bereich von 8,5 ein.

Die beim erfindungsgemäßen Verfahren anfallende Restflüssigkeit enthält in der Regel noch geringe Mengen Sulfit und organische Reststoffe. Es wird deshalb die Restflüssigkeit zur Oxidation der verbliebenen Inhaltsstoffe mit H₂O₂ versetzt. Für diese Oxidation reichen in der Regel geringe Mengen an Wasserstoffperoxid aus. Die schließlich verbleibende Flüssigkeit enthält nur noch umweltverträgliche bzw. abbaubare Komponenten, insbesondere Alkalichloride, und erfüllt nach eventueller Korrektur des pH-Wertes die Voraussetzungen für die Abwassereinleitung (pH 7 bis 9).

Gips fällt bei dem erfindungsgemäßen Verfahren nur in vernachlässigbarer Menge an.

## Patentansprüche

1. Verfahren zur Aufarbeitung von verbrauchten photographischen Bädern aus Schwarz/Weiss-Prozessen, nämlich Entwicklerbädern mit einem überwiegenden Gehalt an Alkalisulfit, insbesondere Natriumsulfit, und Fixierbädern mit einem überwiegenden Gehalt an Thiosulfaten, insbesondere Ammoniumthiosulfat und/oder oder Natriumthiosulfat, dadurch gekennzeichnet, daß nach dem Abscheiden des in den Bädern enthaltenen Silbers
- die verbrauchten Fixierbäder mit konzentrierter HCl auf etwa pH 0,5 gebracht werden und der durch Zerlegung der Thiosulfate entstehende elementare Schwefel abgetrennt wird,
- die verbleibende schwefligsaure Zwischenlösung mit den verbrauchten Entwicklerbädern gemischt und auf etwa pH 2 eingestellt wird, die entstehende, an SO₂ übersättigte Lösung erwärmt und reines SO₂ unter Vakuum abgezogen wird,
- die SO₂-freie Restlösung mit Ca(OH)₂ auf ca. pH 10 eingestellt und das freigesetzte Ammoniak abgezogen wird.

2. Verfahren nach Anspruch 1, dadurch gekennzeichnet, daß die SO₂- und NH₄-freie Restlösung zur Oxidation der verbliebenen anorganischen und organischen Reststoffe mit H₂O₂ versetzt wird.

## Revendications

1. Procédé de retraitement de bains usés de traitement photographique noir et blanc, en particulier de bains de développement présentant une teneur prépondérante en sulfite alcalin, notamment du sulfite de sodium, et de bains de fixation présentant une teneur prépondérante en thiosulfates, en particulier en thiosulfate d'ammonium et/ou en thiosulfate de sodium, caractérisé en ce qu'après séparation de l'argent contenu dans les bains,
. on porte par HCl concentré les bains de fixation usés à un pH d'environ 0,5 et on sépare le soufre élémentaire produit par la décomposition des thiosulfates,
. on mélange la solution intermédiaire sulfureuse résiduelle avec les bains de développement usés et on ajuste son pH à environ 2, on chauffe la solution résultante saturée en SO₂ et on extrait sous vide le SO₂ pur,
. on ajuste le pH de la solution résiduelle exempte de SO₂ à l'aide de Ca(OH)₂ à environ pH 10 et on extrait l'ammoniaque libéré.

2. Procédé selon la revendication 1, caractérisé en ce que la solution résiduelle exempte de SO₂ et de NH₄ est mélangée à H₂O₂ pour réaliser l'oxydation des résidus anorganiques et organiques.

## Claims

1. Process for working up spent photographic baths from black and white processes, namely developing baths with a preponderant content of alkali metal sulphite, particularly sodium sulphite, and fixing baths with a preponderant content of thiosulphates, particularly ammonium thiosulphate and/or sodium thiosulphate, characterized in that following the deposition of the silver contained in the baths
- the spent fixing baths are brought to approximately pH 0.5 with concentrated HCl and the elementary sulphur resulting from the decomposition of the thiosulphates is separated,
- the remaining sulphurous acid intermediate solution is mixed with the spent development baths and set to approximately pH 2, the resulting SO₂-supersaturated solution is heated and pure SO₂ is drawn off in vacuo,
- the SO₂-free residual solution is adjusted to approximately pH 10 with Ca(OH)₂ and the released ammonia is drawn off.

2. Process according to claim 1, characterized in that the residual solution free from SO₂ and NH₄ is mixed with H₂O₂ for oxidizing the remaining inorganic and organic residues.
